(19) Europäisches Patentamt
European Patent Office
Office européen des brevets

(11) Publication number: **0 138 129**
**B1**

# (12) EUROPEAN PATENT SPECIFICATION

(45) Date of publication of patent specification: **04.04.90**

(51) Int. Cl.[5]: **C 08 L 71/00**, C 08 L 65/00, C 08 L 79/08 // (C08L71/00, 79:08),(C08L65/00, 79:08)

(21) Application number: **84111652.8**

(22) Date of filing: **28.09.84**

(54) **Blends of a poly(aryl Ketone) and a polyetherimide.**

(30) Priority: **29.09.83 US 537042**

(43) Date of publication of application:
**24.04.85 Bulletin 85/17**

(45) Publication of the grant of the patent:
**04.04.90 Bulletin 90/14**

(84) Designated Contracting States:
**AT BE CH DE FR GB IT LI LU NL SE**

(56) References cited:
**EP-A-0 033 394**
**EP-A-0 097 969**
**EP-A-0 111 327**
**FR-A-1 486 076**

(73) Proprietor: **AMOCO CORPORATION**
**200 East Randolph Drive P.O. Box 5910-A**
**Chicago Illinois 60680 (US)**

(72) Inventor: **Harris, James Elmer**
**211 Birchview Drive**
**Piscataway, N.J. 08854 (US)**
Inventor: **Robeson, Lloyd Mahlon**
**R.D. 1, Box 244**
**Whitehouse Station, N.J. 08889 (US)**
Inventor: **Gavula, John Peter**
**R.D. 3, Box 228A**
**Lebanon, N.J. 08833 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 138 129 B1

Courier Press, Leamington Spa, England.

## Description

This invention is directed to a molding composition comprising a blend of select poly(aryl ketone)s and a polyetherimide.

Poly(aryl ketone)s are a known class of engineering polymers. Several poly(aryl ketone)s are highly crystalline with melting points above 300°C. Two of these crystalline poly(aryl ketones) are commercially available and are of the following structure:

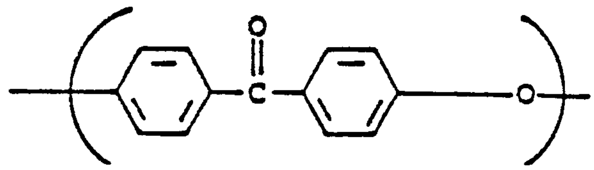

(I)

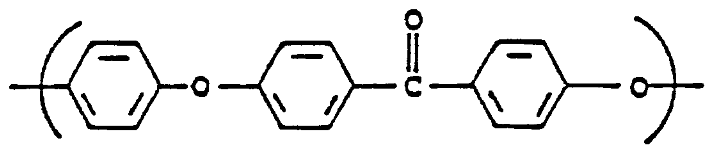

(II)

These poly(aryl ketone)s exhibit a superior combination of properties, i.e., superior thermal and hydrolytic stability, high strength and toughness, superior wear and abrasion resistance and superior solvent resistance. Thus articles molded from poly(aryl ketone)s have utility where high performance is required.

Polyetherimides are also commercially available. They are amorphous thermoplastic polymers with high heat resistance, high strength and modulus, and high dielectric strength. Polyetherimides can be molded in a variety of articles. However, the ultimate use temperature and solvent resistance of the polyetherimides is not acceptable in end use applications where such properties are required. Thus, there is a need to improve these properties without essentially affecting other properties.

EP—A—111327, a document which is relevant under Article 54(3) EPC (colliding application) discloses a molding composition comprising a blend of a poly(aryl ketone) having repeating units of formula (II) above and a polyetherimide.

Further, EP—A—33394 is concerned with molding compositions consisting of poly(arylether) resins preferably containing $SO_2$-units and polyetherimide resins. Said blends are reported to have improved environmental stress crack resistance. However, it has been found that such blends lead to molded articles which are completely hazy.

In the present invention it has been found that blends of select poly(aryl ketone)s and polyetherimides are very compatible, in fact, they tend to form one phase in the amorphous state, and thus are miscible systems. As a result, such blends can significantly improve the ultimate use temperature and stress crack resistance of the polyetherimide.

Due to the miscibility of these blends, injection molded samples of the blends are transparent even though the poly(aryl ketone) is opaque under normal injection molding conditions. Further, with proper annealing, opacity due to crystallization of the poly(aryl ketone) can be accomplished.

Further, the blends of poly(etherimides) and the poly(aryl ketones) may used in a number of diverse high performance applications. These applications include electrical/electronic applications where the addition of a poly(aryl ketone) to a polyetherimide improves the solvent resistance so that solvent cleaning (e.g., trichloroethylene degreasing) can be utilized without part failure due to environmental stress cracking. Polyetherimide modification of the poly(aryl ketone) may be used in composites containing carbon fiber where improved stiffness at 149°C (300°F) is required. This is a specific temperature requirement for certain composite applications, and the increased glass transition temperature (Tg) of the poly(aryl ketone) with the polyetherimide improves this deficiency for poly(aryl ketone)s having low Tg's.

The addition of polyetherimide to poly(aryl ketone) should improve the permeability to such gases as $H_2$, $CO_2$, $O_2$, $N_2$, etc.: this coupled with the enhanced solvent resistance of the blends compared to that of polyetherimide makes the blends of this invention useful in membranes for the separation of gases, reverse osmosis and ultrafiltration. Conversely, the addition of a poly(aryl ketone) to a polyetherimide would result in a decrease in the permeability to certain gases and thus these blends are useful in the fabrication of barrier films for use in, for example, packaging.

Further, the addition of a poly(aryl ketone; to a polyetherimide results in an enhancement in toughness. These blends exhibit toughness exceeding that of either constituent.

In the case where an amorphous polyetherimide is blended with a crystalline poly(aryl ketone), the resultant blend has reduced mold shrinkage and increased dimensional stability as compared to the poly(aryl ketone).

Figure 1 shows the glass transition temperature for compositions containing 0—100 weight percent of a poly(aryl ketone) and 0—100 weight percent of a polyetherimide. The single glass transition shown by the

line in Figure 1, that varies continuously with composition, indicates thermodynamic miscibility for blends of the two polymers. As a consequence this unexpected result yields transparent injection molded articles which exhibit excellent mechanical properties including tensile impact strength which is greater than the values of the constituents.

According to the present invention there is provided a molding composition comprising a particular poly(aryl ketone) and a polyetherimide.

The poly(aryl ketone) is used in amounts of from 2 to 98, preferably from about 15 to 85 weight percent and the polyetherimide is used in amounts of from 2 to 98, preferably from 15 to 85 weight percent.

The poly(aryl ketone)s which are suitable for use herein contain repeating units of the following formula:

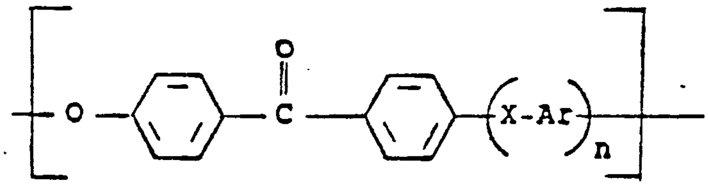

wherein Ar is independently a divalent aromatic radical selected from phenylene, biphenylene or naphthylene, X

is independently O,

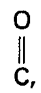

or a direct bond, and n is an integer of from 1 to 3, poly(aryl ketones) which have repeating units of formula II above being excluded.

The most preferred poly(aryl ketones) have repeating units of the formula:

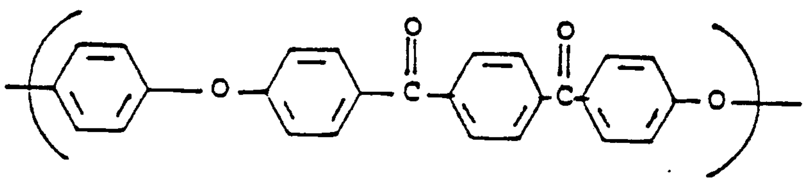

, or

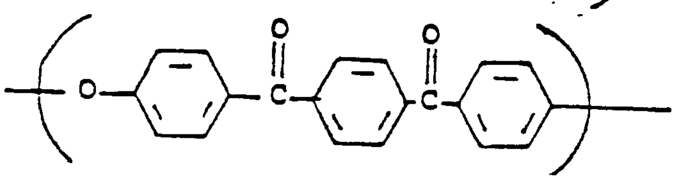

These poly(aryl ketone)s are prepared by methods well known in the art, such as by heating a substantialy equimolar mixture of at least one bisphenol and at least one dihalobenzoid compound or at least one halophenol compound. Preferred bisphenols include:

hydroquinone:
4,4'-dihydroxybenzophenone,
4,4'-dihydroxybiphenyl,
4,4'-dihydroxydiphenyl ether and
2,2'-bis(4-hydroxyphenyl)propane.

Preferred dihalo and dihalobenzoid compounds include:
4-(4-chlorobenzoyl)phenol,
4,4'-difluorobenzophenone,
4,4'-dichlorobenzophenone,
4-chloro-4'-fluorobenzophenone,

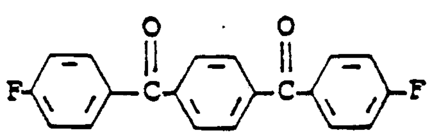

and

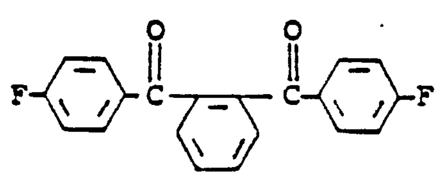

The poly(aryl ketone)s may be produced by the process as described in U.S. Patent 4,176,222. This process comprises heating in the temperature range of 100° to 400°C., (i) a substantially equimolar mixture

of (a) at least one bisphenol and (b) at least one dihalobenzoid compound, or (ii) at least one halophenol, in which in the dihalobenzenoid compound or halophenol, the halogen atoms are activated by —CO— groups ortho or para thereto, with a mixture of sodium carbonate or bicarbonate and a second alkali metal carbonate or bicarbonate, the alkali metal of said second alkali metal carbonate or bicarbonate having a higher atomic number than that of sodium, the amount of said second alkali metal carbonate or bicarbonate being such that there are 0.001 to 0.2 gram atoms of said alkali metal of higher atomic number per gram atom of sodium, the total amount of alkali metal carbonate or bicarbonate being such that there is at least one alkali metal atom for each phenol group present, and thereafter separating the polymer from the alkali metal halide.

The term poly(aryl ketone) is meant to include homopolymers, copolymers, terpolymers, and the like.

The poly(aryl ketone)s have a reduced viscosity of at least about 0.6 to about 3.0, as measured in concentrated sulphuric acid at 25°C.

The polyetherimides suitable for use in this invention are well known in the art and are described in, for example, U.S. Patents 3,847,867, 3,838,097 and 4,107,147.

The polyetherimides are of the following formula:

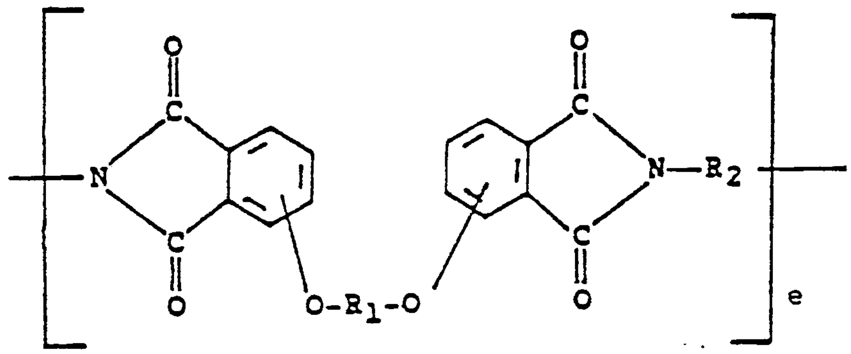

(III)

wherein e is an integer greater than 1, preferably from about 10 to about 10,000 or more, $—O—R_1—O—$ is attached to the 3 or 4 and 3′ or 4′ positions and $R_1$ is selected from (a) a substituted or unsubstituted aromatic radical such as

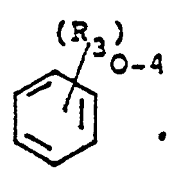 or 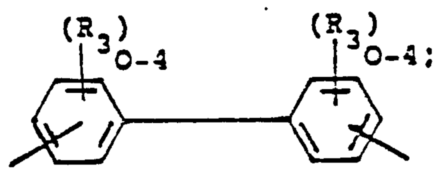

(b) a divalent radical of the formula:

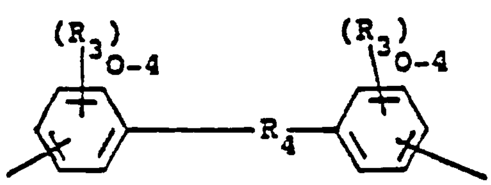

wherein $R_3$ is independently $C_1$ to $C_6$ alkyl, aryl or halogen and

$R_4$ is selected from —O—, —S—,

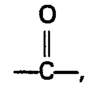

$—SO_2—$, —SO—, alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6 to 20 carbon atoms and halogenated derivatives thereof, or alkyl substituted derivatives thereof, wherein the alkyl group contains 1 to 6 carbon atoms, alkylene and cycloalkylene radicals having from 2 to 20, and preferably from 2 to 8, carbon atoms and $C_2$ and $C_8$ alkylene terminated polydiorganosiloxane or a divalent radical of the formula

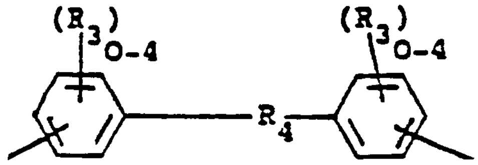

wherein $R_3$ and $R_4$ are as previously defined.

The polyetherimides may also be of the following formula:

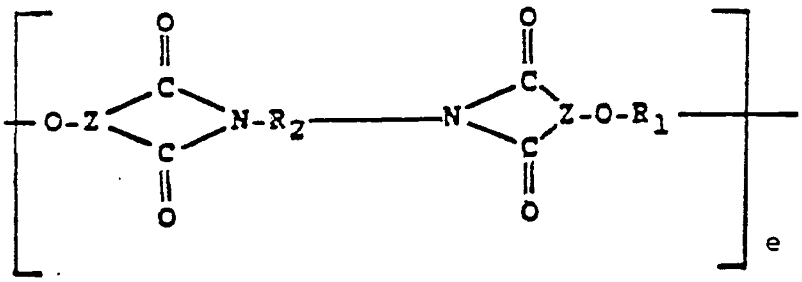

(IV)

wherein —O—Z is a member selected from

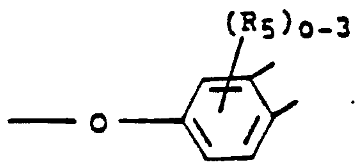

wherein $R_5$ is independently hydrogen, lower alkyl or lower alkoxy

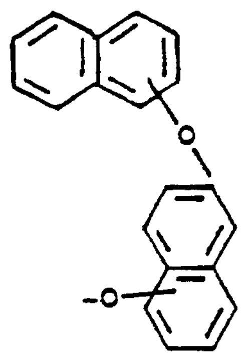

and,

wherein the oxygen may be attached to either ring and located ortho or para to one of the bonds of the imide carbonyl groups, $R_1$ and $R_2$ and e are as previously defined.

These polyetherimides are prepared by methods well known in the art as set forth in, for example, U.S. Patents 3,833,544, 3,887,588, 4,017,511, 3,965,125 and 4,024,110.

The polyetherimides of Formula (III) can, for example, be obtained by any of the methods well-known to those skilled in the art including the reaction of any aromatic bis(ether anhydride)s of the formula

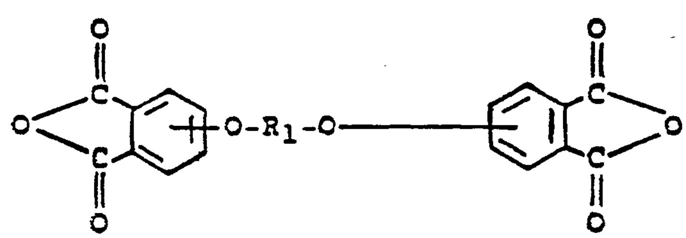

(V)

where $R_1$ is as defined hereinbefore, with a diamino compound of the formula

$$H_2N—R_2—NH_2 \quad (VI)$$

where $R_2$ is as defined hereinbefore. In general, the reactions can be advantageously carried out employing well-known solvents, e.g., o-dichlorobenzene, m-cresol/toluene, N,N-dimethylacetamide, etc., in which to effect interaction between the dianhydrides and diamines, at temperatures of from about 20 to about 250°C. Alternatively, the polyetherimides can be prepared by melt polymerization of any dianhydrides of Formula (V) with any diamino compound of Formula (VI) while heating the mixture of the ingredients at elevated temperatures with concurrent intermixing. Generally, melt polymerization temperatures between about 200° to 400°C and preferably 230° to 300°C can be employed. Any order of addition of chain stoppers ordinarily employed in melt polymerizations can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mole percent) of diamine can be employed resulting in the production of polyetherimides of Formula III have an intrinsic viscosity $\eta$ greater than 0.2 deciliters per gram, preferably 0.35 to 0.60, or 0.7 deciliters per gram or even higher when measured in m-cresol at 25°C.

The aromatic bis(ether anhydride)s of Formula (V) include, for example,
2,2-bis[4-(2,3-dicarboxyphenoxy)phenyl]propane dianhydride:
4,4'-bis(2,3-dicarboxyphenoxy)diphenyl ether dianhydride;
1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride;
2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)diphenyl-2,2-propane dianhydride; etc. and mixtures of such dianhydrides.

The organic diamines of Formula (VI) include, for example, m-phenylenediamine, p-phenylenediamine, 2,2-bis(p-aminophenyl)propane, 4,4'-diaminodiphenyl-methane, 4,4'-diaminodiphenyl sulfide, 4,4'-diamino-diphenyl sulfone, 4,4'-diaminodiphenyl ether, 1,5-diaminonaphthalene, 3,3'-dimethylbenzidine, 3,3'-dimethoxybenzidine.

The polyetherimides of formula (IV) may, for example, be prepared by effecting reaction in the presence of a dipolar aprotic solvent of a mixture of ingredients comprising, for instance, (1) a bis(nitrophthalimide) of the general formula:

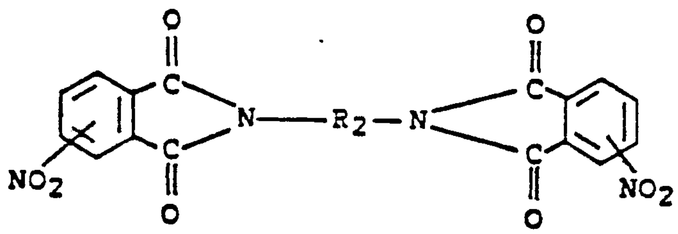

(VII)

wherein $R_2$ is defined as hereinabove, and (2) an alkali metal salt of an organic compound of the general formula:

$$MO—R_1—OM \quad (VIII)$$

wherein M is an alkali metal and $R_1$ is defined as hereinabove.

The bis(nitrophthalimide) used in preparing the polymer is formed by reacting a diamine of the formula described above, $NH_2—R_2—NH_2$, with a nitro-substituted aromatic anhydride of the formula:

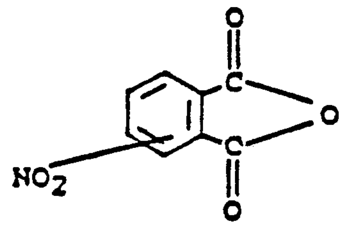

(IX)

The molar ratio of diamine to anhydride should ideally be about 1:2 respectively. The initial reaction product is a bis(amide-acid) which is subsequently dehydrated to the corresponding bis(nitrophthalimide).

The diamines are described, *supra.*

The preferred nitrophthalic anhydrides useful in the present invention are 3-nitrophthalic anhydride, 4-nitrophthalic anhydride and mixtures thereof. These reactants are commercially available in reagent grade. They may also be prepared by the nitration of phthalic anhydride using procedures described in Organic Syntheses, Collective Vol. I, Wiley (1948), page 408. Certain other closely related nitroaromatic anhydrides may also be used in the reaction and are illustrated for example by 2-nitronaphthalic anhydride, 1-nitro-2,3-naphthalene-dicarboxylic anhydride and 3-methoxy-6-nitrophthalic anhydride, and the like.

With reference to the alkali metal salts of formula (VIII) among the divalent carbocyclic aromatic radicals which $R_1$ may represent (mixtures of such radicals are also included) are, for instance, divalent aromatic hydrocarbon radicals of from 6 to 20 carbon atoms, such as phenylene, biphenylene, naphthylene, etc. Included are residues of, e.g. hydroquinone, resorcinol, chlorohydroquinone, etc. In addition, $R_1$ may be a residue of a dihydroxyl diarylene compound in which the aryl nuclei are joined by either an aliphatic group, a sulfoxide group, sulfonyl group, sulfur, carbonyl group, oxygen, etc. Typical of such diarylene compounds are the following:

2,4-dihydroxydiphenylmethane;
bis(2-hydroxyphenyl)methane;
2,2-bis(4-hydroxyphenyl)propane;
bis(4-hydroxyphenyl)methane;
bis(4-hydroxy-5-nitrophenyl)methane;
bis(4-hydroxy-2,6-dimethyl-3-methoxyphenyl)methane;
1,1-bis(4-hydroxyphenyl)ethane;
1,2-bis(4-hydroxyphenyl)ethane;
1,1-bis(4-hydroxy-2-chlorophenyl)ethane;
1,1-bis(2,5-dimethyl-4-hydroxyphenyl)ethane;
1,3-bis(3-methyl-4-hydroxyphenyl)propane;
2,2-bis(3-phenyl-4-hydroxyphenyl)propane;
2,2-bis(3-isopropyl-4-hydroxyphenyl)propane;
2,2-bis(4-hydroxynaphthyl)propane;
hydroquinone;
naphthalene diols;
bis(4-hydroxyphenyl)ether;
bis(4-hydroxyphenyl)sulfide;
bis(4-hydroxyphenyl)sulfone; and the like.

When dialkali metal salts of formula (VIII) are used with the compound illustrated by formula (VII), the ingredients are advantageously present in an equal molar ratio for optimum molecular weight and properties of the polymer. Slight molar excesses, e.g., about 0.001 to 0.10 molar excess of either the dinitro-substituted organic compound or of the dialkali metal salt of formula (VIII) may be employed. When the molar ratios are approximately equal, the polymer is substantially terminated by a $= Z—NO_2$ at one end and a phenolic group at the other end. If there is a molar excess of one compound, that particular terminal group will predominate.

The conditions of reaction whereby the alkali-metal salt of formula (VIII) is reacted with the dinitro-substituted organic compound of formula (VII) can be varied widely. Generally, temperatures of the order of about 25 to about 150°C are advantageously employed, although it is possible to employ lower or higher temperature conditions depending on the ingredients used, the reaction product sought, time of reaction, solvent employed, etc. In addition to atmospheric pressure, superatmospheric pressures and subatmospheric pressures may be employed depending upon the other conditions of reaction, the ingredients used, the speed at which it is desired to effect reaction, etc.

The time of reaction also can be varied widely depending on the ingredients used, the temperature, the desired yield, etc. It has been found that times varying from about 5 minutes to as much as 30 to 40 hours are advantageously employed to obtain the maximum yield and desired molecular weight. Thereafter the reaction product can be treated in the appropriate manner required to effect precipitation and/or separation of the desired polymeric reaction product. Generally, common solvents such as alcohols (e.g. methanol, ethanol, isopropyl alcohol, etc.) and aliphatic hydrocarbons (e.g. pentane, hexane, octane, cyclohexane, etc.) may be employed as precipitants for this purpose.

It is important that the reaction between the dinitro-substituted organic compound of formula (VII) and the alkali-metal salt of formula (VIII) (mixtures of such alkali-metal salts can also be used) be carried out in the presence of a dipolar aprotic solvent.

The polymerization is performed under anhydrous conditions usually using dipolar aprotic solvents such as dimethylsulfoxide which are added in varying amounts depending upon the particular polymerization. A total quantity of solvent, dipolar aprotic solvent or mixture of such solvent with an aromatic solvent sufficient to give a final solution containing 10 to 20% by weight of polymer is preferably employed.

The preferred polyetherimides include those having repeating units of the following formula:

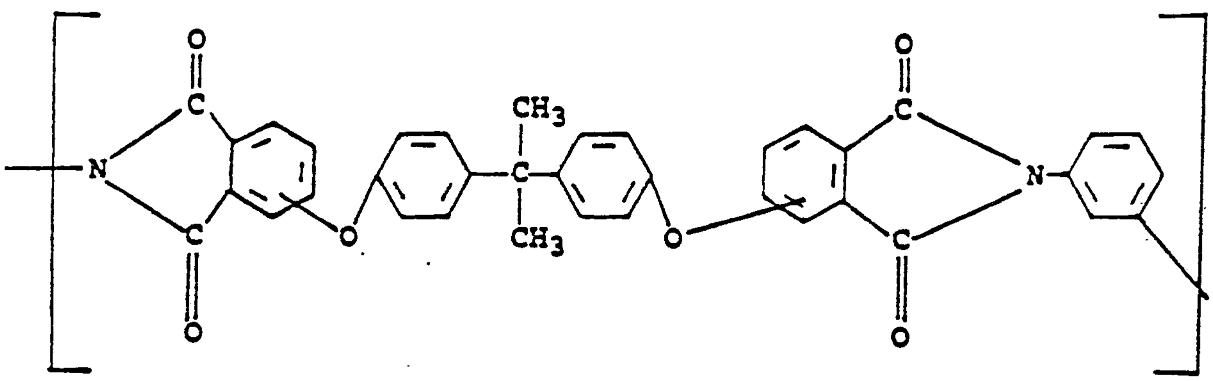

Other additives may be included in the composition of this invention. These additives include plasticizers; pigments; reinforcing agents, such as glass fibers; thermal stabilizers; ultraviolet light stabilizers, processing aids, flame retardant synergists, such as $Sb_2O_3$ and zinc borate, and the like.

The compositions of this invention are prepared by any conventional mixing methods. For example, a preferred method comprises mixing the poly(aryl ketone) and polyetherimide in powder or granular form in an extruder and extruding the mixture into strands, chopping the strands into pellets and molding the pellets into the desired article.

## Examples

The following examples serve to give specific illustrations of the practice of this invention but they are not intended in any way to limit the scope of this invention.

The following designations used in the Examples have the following meaning:

*Poly(aryl ketone) I* — a polymer containing repeat units of the following formula:

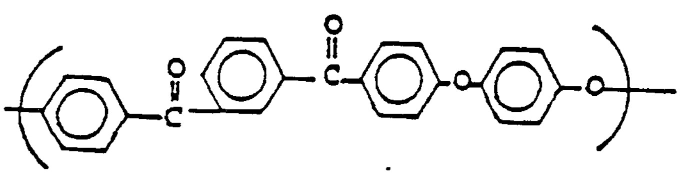

having a reduced viscosity of 1.21 dl/g as measured in a 96 percent sulfuric acid solution (one percent polymer solution) at 25°C.

*Poly(aryl ketone) II* — a polymer containing repeat units of the following formula:

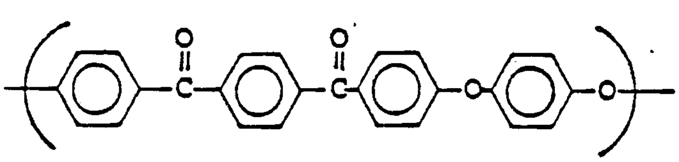

having a reduced viscosity of 1.71 dl/g as measured in a 96 percent sulfuric acid solution (one percent polymer solution) at 25°C.

*Polyetherimide* — a polymer containing repeat units of the following formula:

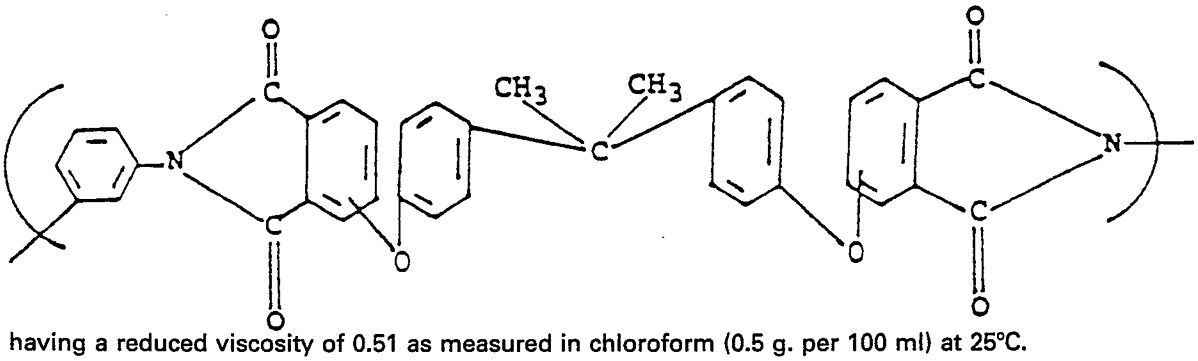

having a reduced viscosity of 0.51 as measured in chloroform (0.5 g. per 100 ml) at 25°C.

CONTROL A

The polyetherimide was compression molded in a 10.2 × 10.2 × 0.05 cm (4 × 4 × 0.020 inch) cavity mold at about 325°C in a South Bend hydraulic press. The sample was cooled while in the press by passing water through cooling channels within the platens. Cooling from 325°C to room temperature took about 5 minutes. 3.2 mm (one-eighth inch) strips were shear cut from the molded product. These strips were tested for 1% secant modulus according to a procedure similar to ASTM D-638, tensile strength and elongation at break according to ASTM D-638, and pendulum impact strength [(pendulum impact strength is measured as follows: A steel pendulum is used, cylindrical in shape with a diameter of 2.1 cm (0.83 inch) and weighing 0.708 kg (1.562 pounds); the striking piece, mounted almost at the top of the pendulum is a cylinder 0.76 cm (0.3 inch) in diameter; film specimens, 10.2 cm (4 inches) long, 3.2 mm (0.125 inch) wide and about 0.025 to 0.76 mm (1 to 30 mils) thick are clamped between the jaws of the tester so that the jaws are spaced 2.5 cm (1 inch) apart; the 3.2 mm (0.125 inch) width of the film is mounted vertically; the pendulum is raised to a constant height to deliver 1.55 Nm (1.13 foot pounds) at the specimen; when the pendulum is released the cylindrical striking piece hits the specimen with its flat end, breaks the film, and travels to a measured height beyond; the difference in the recovery height (i.e., the difference in the potential energy of the pendulum at the maximum point of the upswing) represent the energy absorbed by the specimen during the rupture; the impact strength, expressed in $Nm/cm^3$ (foot-pounds per cubic inch) is obtained by dividing the pendulum energy loss by the volume of the specimen]. The results are shown in Table I..

CONTROL B

Poly(aryl ketone) I was molded into a 10.2 × 10.2 × 0.05 cm (4 × 4 × 0.02 inch) plaque at 325°C in a cavity mold placed in a hydraulic press equipped with heated jaws. 3.2 mm (one-eighth inch) strips were shear cut from the molded product. These strips were tested for 1% secant modulus according to a procedure similar to ASTM D-638, tensile strength and elongation at break according to ASTM D-638, and pendulum impact strength. The results are shown in Table I.

CONTROL C

Poly(aryl ketone) II was molded into a 10.2 × 10.2 × 0.05 cm (4 × 4 × 0.020 inch) plaque in a cavity mold at about 400°C. The sample was tested as in Control B and the results are shown in Table I.

Example 1

Sixty parts by weight of the polyetherimide of Control A and 40 parts by weight of the poly(aryl ketone) of Control B were mixed in a Brabender Plasticorder blender at 300°C. The mixture was molded into a 10.2 × 10.2 × 0.05 cm (4 × 4 × 0.020 inch) plaque in a cavity mold at 325°C. The molded specimen was tested as in Control B and the results are shown in Table I.

Example 2

Sixty parts by weight of the polyetherimide of Control A and 40 parts by weight of a poly(aryl ketone) identical to Control C (but with an R.V. of 1.34 as measured in 96% sulfuric acid at 25°C, 1% polymer solution) were mixed in a Brabender Plasticorder blender at 385°C. The mixture was molded into a 10.2 × 10.2 × 0.05 cm (4 × 4 × 0.020 inch) plaque in a cavity mold at about 385°C. The molded specimen was tested as in Control B and the results are shown in Table I.

The results for Examples 1 and 2 shown in Table I demonstrate the excellent mechanical compatibility of these blends.

Exemplary groups falling within the definitions given above are:

$C_1$ to $C_6$ alkyl, e.g. methyl, ethyl, propyl, butyl, pentyl or hexyl; the alkylene and alkylidene groups, respectively include radicals formed by abstraction of one hydrogen from the above alkyl radicals.

$C_4$ to $C_8$ cycloalkylene and cycloalkylidene gorups, resp., include radicals formed by abstraction of two hydrogens from cyclobutane, cyclopentane, cyclohexane, cycloheptane and cyclooctane.

The alkyl group in lower alkyl and lower alkoxy contains 1 to 6, preferably 1 to 4, carbon atoms, e.g. those mentioned above.

Exemplary (monovalent) aryl groups are phenyl, naphthyl and biphenyl. The divalent aromatic hydrocarbon radicals include phenylene, naphthylene and biphenylene.

Halogen includes fluorine, chlorine, bromine and iodine.

**Claims**

1. A molding composition comprising a blend of:

(a) a poly(aryl ketone) having repeating units of the following formula:

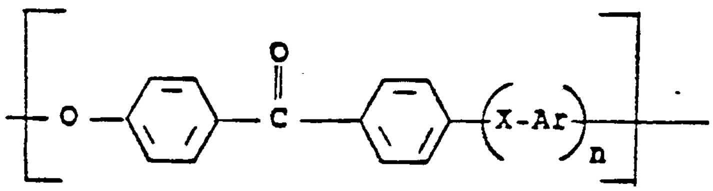

wherein Ar is independently a divalent aromatic radical selected from phenylene, biphenylene, or naphthylene, X is independently O,

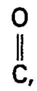,

or a direct bond and n is an integer of from 1 to 3 with the exception of the poly(aryl ketone) which has repeating units of the formula:

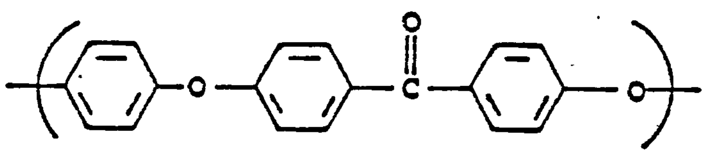

and

(b) a polyetherimide.

2. A composition as defined in claim 1 wherein the poly(aryl ketone) has repeating units of the formula:

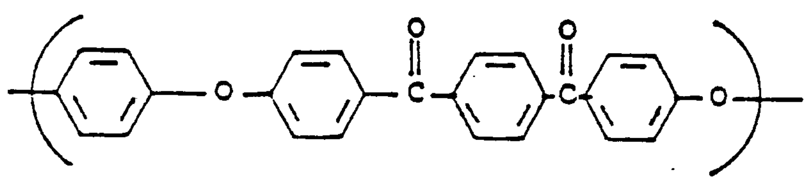.

3. A composition as defined in claim 1 wherein the poly(aryl ketone) has repeating units of the formula:

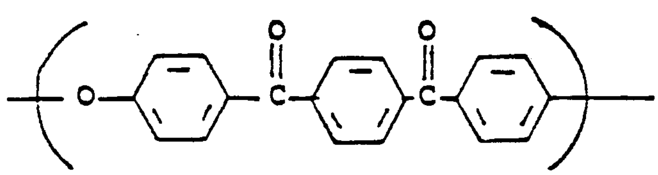

4. A composition as defined in claim 1 wherein the polyetherimide has repeating units of the following formula:

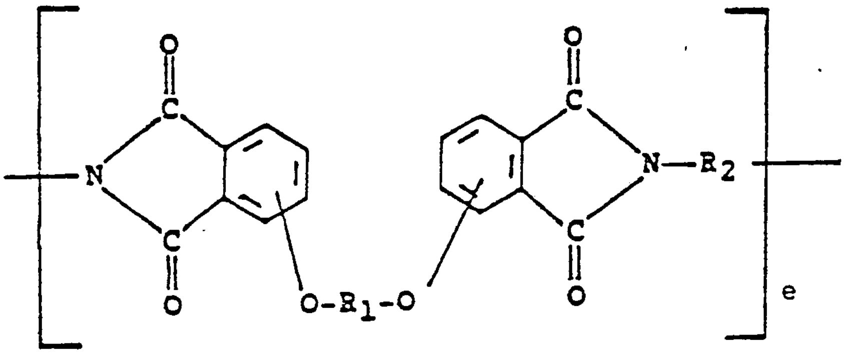

wherein e is an integer greater than 1, preferably from 10 to 10,000 or more, —O—$R_1$—O— is attached to the 3 or 4 and 3′ or 4′ positions and $R_1$ is selected from (a) a substituted or unsubstituted aromatic radical such as

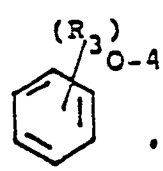

or

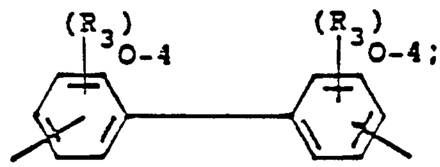

(b) a divalent radical of the formula:

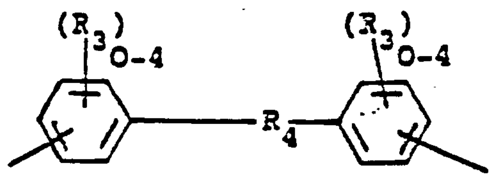

wherein $R_3$ is independently $C_1$ to $C_6$ alkyl, aryl or halogen and

$R_4$ is selected from —O—, —S—,

$$-\overset{\displaystyle O}{\overset{\|}{C}}-,$$

—$SO_2$—, —SO—, alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6 to 20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms and $C_2$ to $C_8$ alkylene terminated polydiorganosiloxane or a divalent radical of the formula

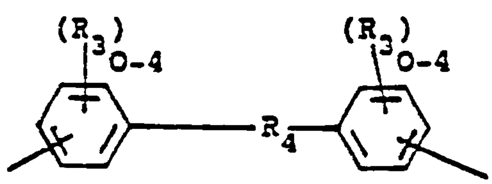

wherein $R_3$ and $R_4$ are as previously defined.

5. A composition as defined in claim 1 wherein the polyetherimide has repeating units of the following formula:

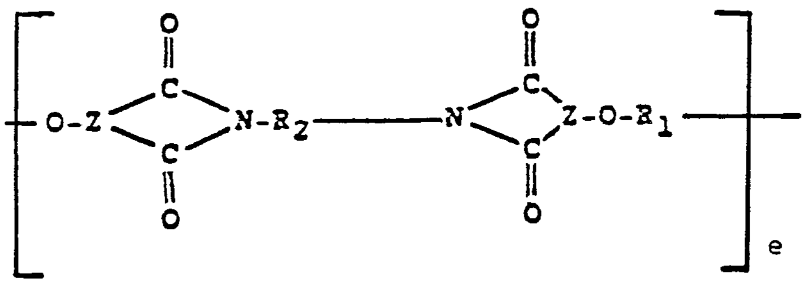

wherein —O—Z is a member selected from

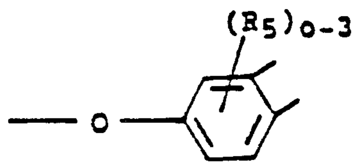

wherein $R_5$ is independently hydrogen, lower alkyl or lower alkoxy

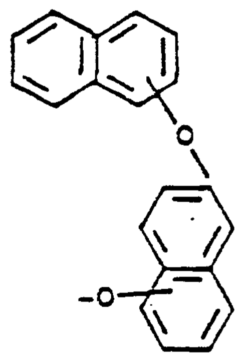

and,

wherein the oxygen may be attached to either ring and located ortho or para to one of the bonds of the imide carbonyl groups, $R_1$ and $R_2$ and e are as defined in claim 5.

6. A composition as defined in claim 1 wherein the polyetherimide has repeating units of the following formula:

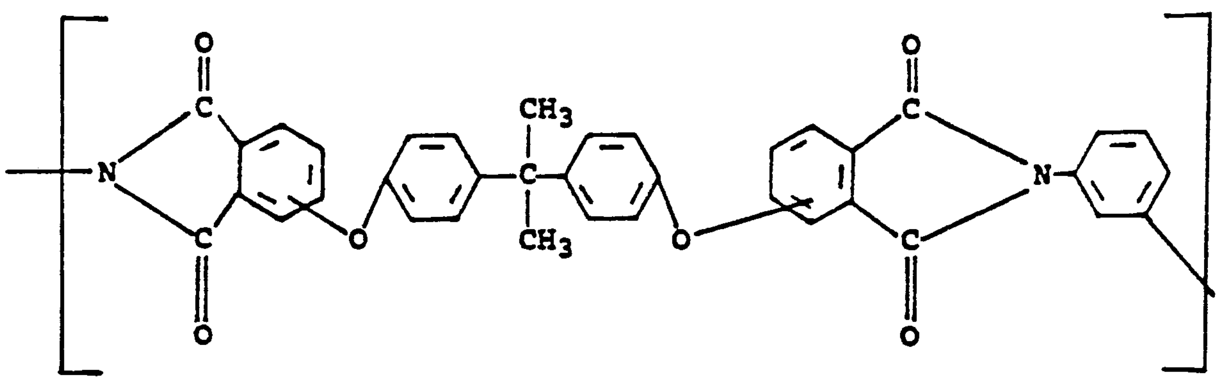

**Patentansprüche**

1. Formzusammensetzung, die umfaßt: eine Mischung aus
(a) einem Poly(arylketon) mit wiederkehrenden Einheiten der folgenden Formel:

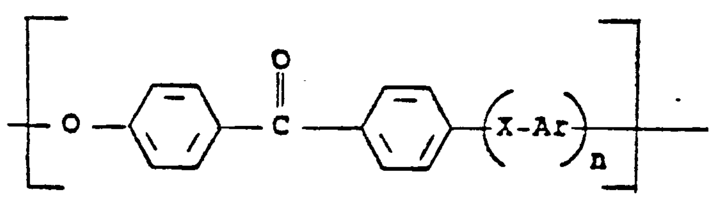

worin Ar unabhängig ein zweiwertiger aromatischer Rest, ausgewählt aus Phenylen, Biphenylen oder Naphthylen ist,

X unabhängig O,

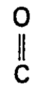

oder eine direkte Bindung ist und n eine ganze Zahl von 1 bis 3 ist, ausgenommen das Poly(arylketon) mit wiederkehrenden Einheiten der Formel

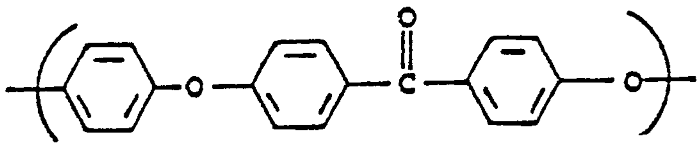

und

(b) ein Polyetherimid.

2. Zusammensetzung nach Anspruch 1, worin das Poly(arylketon) wiederkehrende Einheiten der Formel

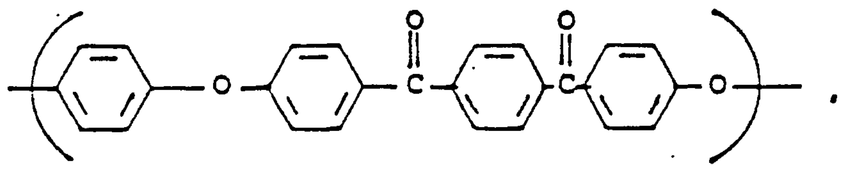

hat.

3. Zusammensetzung nach Anspruch 1, worin das Poly(arylketon) wiederkehrende Einheiten der Formel

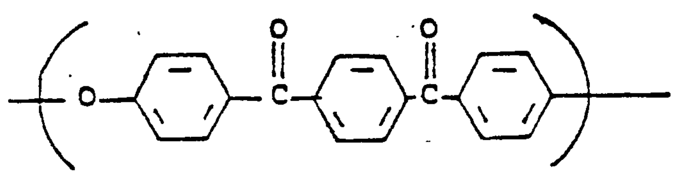

hat.

4. Zusammensetzung nach Anspruch 1, worin das Polyetherimid wiederkehrende Einheiten der folgenden Formel

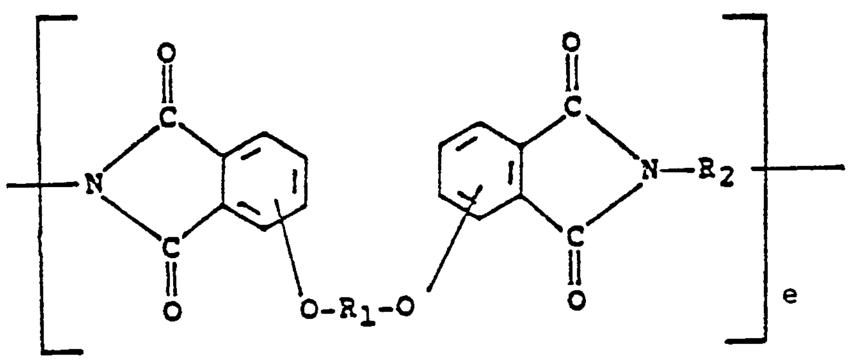

hat, worin e eine ganze Zahl größer als 1, vorzugsweise von 10 bis 10 000 oder mehr, ist, $—O—R_1—O—$ an die 3- oder 4- und 3'-oder 4'-Stellungen gebunden ist und $R_1$ ausgewählt ist aus (a) einem substituierten oder unsubstituierten aromatischen Rest, wie

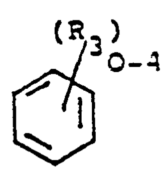

oder

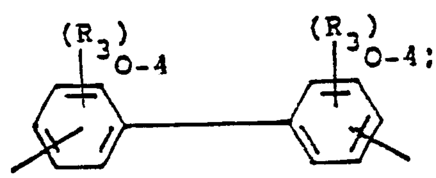

(b) einem zweiwertigen Rest der Formel

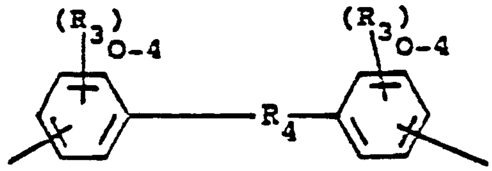

worin $R_3$ unabhängig $C_1$—$C_6$-Alkyl, Aryl oder Halogen ist und $R_4$ ausgewählt ist aus —O—, —S—,

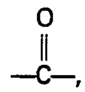

—$SO_2$—, —SO—, Alkylen mit 1 bis 6 Kohlenstoffatomen, Cycloalkylen mit 4 bis 8 Kohlenstoffatomen, Alkyliden mit 1 bis 6 Kohlenstoffatomen oder Cycloalkyliden mit 4 bis 8 Kohlenstoffatomen, $R_2$ ausgewählt ist aus einem aromatischen Kohlenwasserstoffrest mit 6 bis 20 Kohlenstoffatomen und halogenierten Derivaten oder alkylsubstituierten Derivaten desselben, worin die Alkylgruppe 1 bis 6 Kohlenstoffatome enthält, Alkylen- und Cycloalkylenresten mit 2 bis 20 Kohlenstoffatomen und Polydiorganosiloxan mit endständigen $C_2$—$C_8$-Alkylengruppen oder einem zweiwertigen Rest der Formel

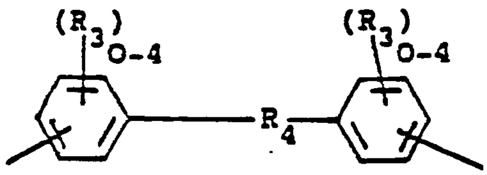

worin $R_3$ und $R_4$ wie oben definiert sind.

5. Zusammensetzung nach Anspruch 1, worin das Polyetherimid wiederkehrende Einheiten der folgenden Formel

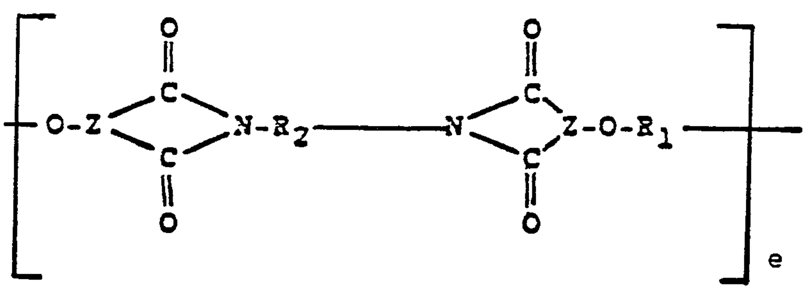

hat, worin —O—Z ausgewählt ist aus

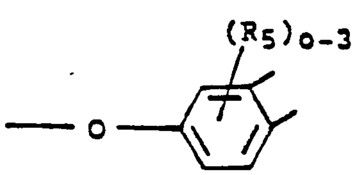

worin $R_5$ unabhängig Wasserstoff, Niederalkyl oder Niederalkoxy ist, und

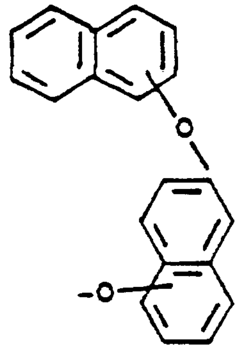

worin der Sauerstoff an irgendeinen Ring gebunden sein und sich in o- oder p-Stellung zu einer der Bindungen der Imidcarbonylgruppen befinden kann und $R_1$ und $R_2$ sowie e wie in Anspruch 5 definiert sind.

6. Zusammensetzung nach Anspruch 1, worin das Polyetherimid wiederkehrende Einheiten der folgenden Formel

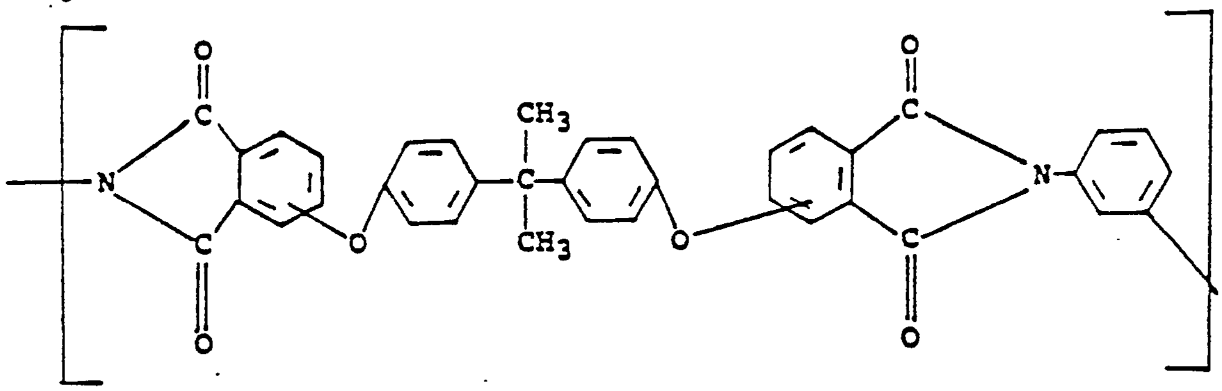

hat.

**Revendications**

1. Composition à mouler, comprenant un mélange:

(a) d'une poly(arylcétone) ayant des motifs répétés de formule suivante:

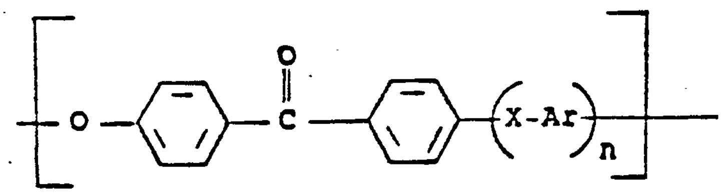

dans laquelle Ar représente indépendamment un radical aromatique divalent choisi entre les radicaux phénylène, biphénylène ou napthylène, X représente indépendamment O,

O
||
C,

ou une liaison simple et n est un nombre entier de 1 à 3, à l'exception de la poly(arylcétone) qui porte des motifs répétes de formule

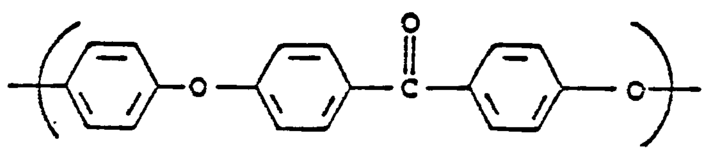

et

(b) d'un polyétherimide.

2. Composition suivant la revendication 1, dans laquelle la poly(arylcétone) porte des motifs répétés de formule

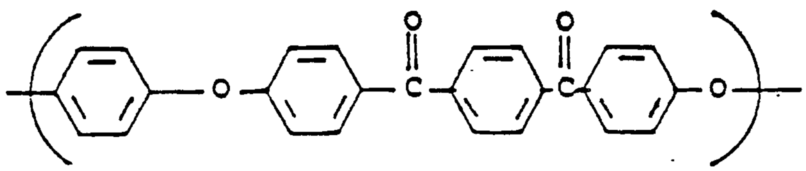

3. Composition suivant la revendication 1 dans laquelle la poly(arylcétone) porte des motifs répétés de formule:

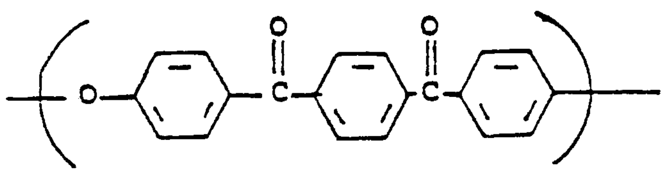

4. Composition suivant la revendication 1, dans laquelle le polyétherimide porte des motifs répétés de formule suivante:

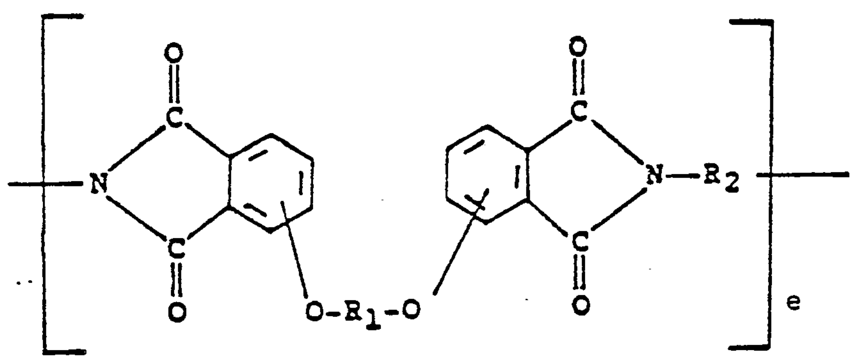

dans laquelle e est un nombre entier supérieur à 1, ayant de préférence une valeur de 10 à 10 000 ou plus, —O—$R_1$—O— est attaché dans les positions 3 ou 4 et 3′ ou 4′ et $R_1$ est choisi entre (a) un radical aromatique substitué ou non substitué tel que

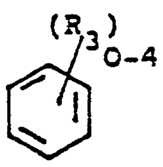

ou

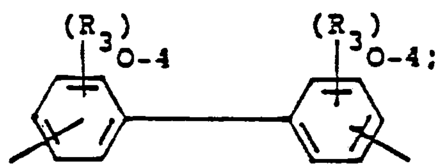

ou

(b) un radical divalent de formule:

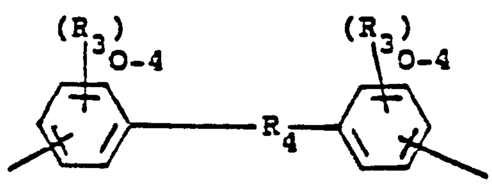

dans laquelle $R_3$ représente indépendamment un groupe alkyle en $C_1$ à $C_6$, un groupe aryle ou un halogène et $R_4$ est choisi entre —O—, —S—,

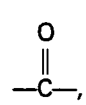

—$SO_2$—, —SO—, un groupe alkylène de 1 à 6 atomes de carbone, cycloalkylène de 4 à 8 atomes de carbone, alkylidène de 1 à 6 atomes de carbone ou cycloalkylidène de 4 à 8 atomes de carbone, $R_2$ est choisi

entre un radical hydrocarboné aromatique ayant 6 à 20 atomes de carbone et ses dérivés halogénés ou ses dérivés à substituant alkyle dont le groupe alkyle contient 1 à 6 atomes de carbone, des radicaux alkylène et cycloalkylène ayant 2 à 20 atomes de carbone et un polydiorganosiloxane à terminaison alkylène en $C_2$ à $C_8$ ou un radical divalent de formule

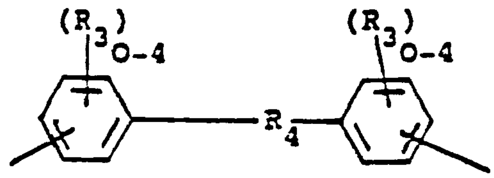

dans laquelle $R_3$ et $R_4$ ont les définitions données précédemment.

5. Composition suivant la revendication 1, dans laquelle le polyétherimide porte des motifs répétés de formule suivante:

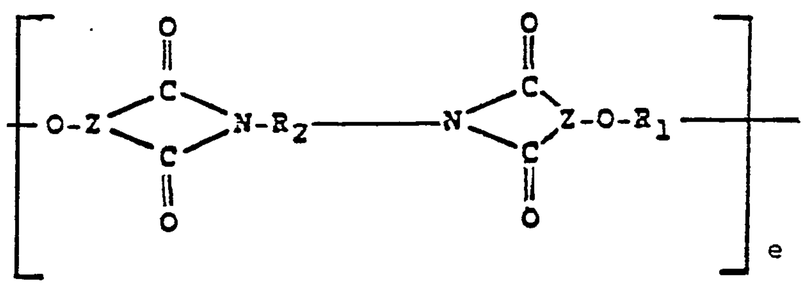

dans laquelle —O—Z est un groupe de formule

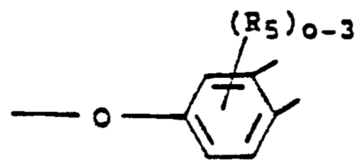

dans laquelle $R_5$ représente indépendamment l'hydrogène, un radidcal alkyle inférieur ou alkoxy inférieur

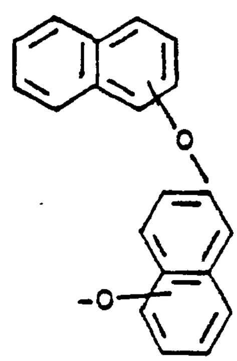

et

dans laquelle l'oxygène peut être attaché au noyau ou peut se trouver en position ortho ou para par rapport à l'une des liaisons des groupes carbonyle d'imide, $R_1$ et $R_2$ et e sont tels que définis dans la revendication 5.

6. Composition suivant la revendication 1, dans laquelle le polyétherimide porte des motifs répétés de formule suivante:

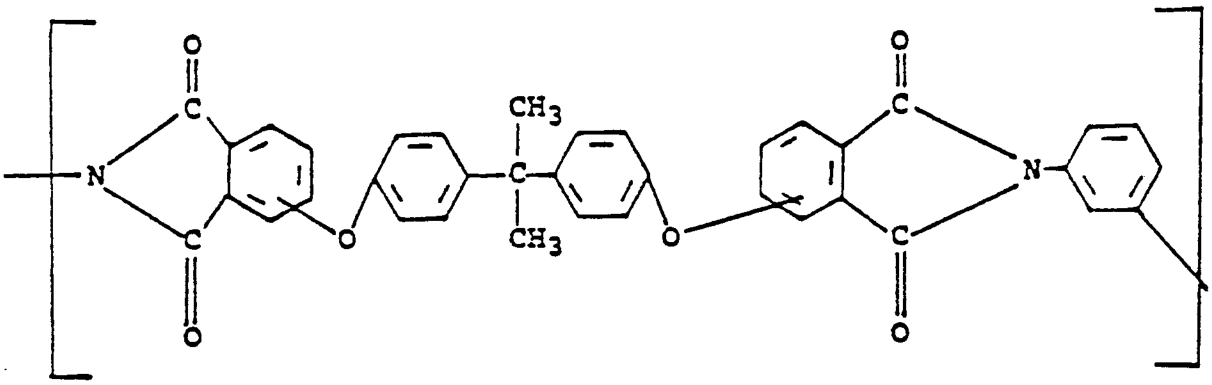

GLASS TRANSITION TEMPERATURE AS A FUNCTION OF COMPOSITION FOR POLYETHERIMIDE-POLY(ARYL KETONE)

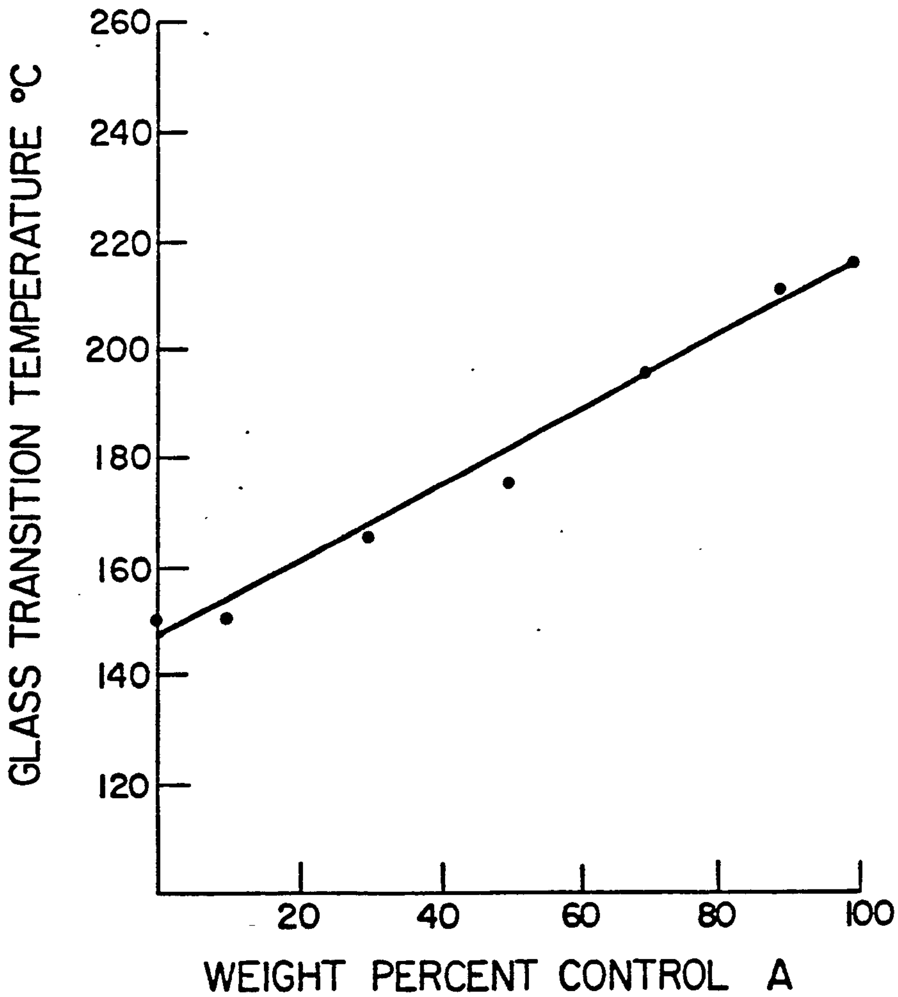


FIG. 1